# EUROPEAN PATENT APPLICATION

(11) **EP 2 940 573 A1**
(43) Date of publication of application: **04.11.2015**
(21) Application number: 14305626.5
(22) Date of filing: 28.04.2014
(51) Int. Cl.: G06F 3/06

(54) **Method and apparatus for processing virtual block device file data blocks in a guest machine storage and corresponding data blocks in a virtual storage of a host machine**

(71) Applicant: Thomson Licensing, 92130 Issy-les-Moulineaux (FR)
(72) Inventor: Arrighetti, Walter, 30625 Hannover (DE)
(74) Representative: Hartnack, Wolfgang

(57) **Abstract**

The invention is related to processing Virtual Block Device File data blocks in a guest machine storage and corresponding data blocks in a virtual storage of a host machine, so as to facilitate improved I/O between host machine and guest machine. In case data blocks of a virtual block device file are fragmented in the guest machine storage as well as in the corresponding virtual storage in the host machine, the virtual block device file data blocks are defragmented in the guest machine storage such that consecutive data blocks of the file are physically contiguous with respect to guest machine-driven read/write operations, or the virtual block device file data blocks are re-indexed in the guest machine storage such that the corresponding data blocks of the virtual storage of the host machine are contiguous with respect to host machine-driven read/write operations in the host file system. The host machine can issue TRIM operations on unnecessary ones of the data blocks and the guest machine removes physically the corresponding data blocks in the virtual block device file storage. In case data blocks in the host machine virtual storage are unused, corresponding portions of the virtual block storage can be deleted by virtually allocating them and, by using sparse file capabilities in the file system of the guest machine, the corresponding sections in the virtual block device file are replaced by sparse blocks.

## Description

### Technical field

The invention relates to a method and to an apparatus for processing Virtual Block Device File data blocks in a guest machine storage and corresponding data blocks in a virtual storage of a host machine, so as to facilitate improved I/O between host machine and guest machine.

### Background

Virtual Machines (VM) may employ specialised types of virtualised block devices (VBD) to simulate storage infrastructure, e.g. disks, volumes, logical units and file systems. However, while being an advantage for implementation, compatibility and scalability purposes, abstraction of hardware-related features may be a problem since all the allocation mechanisms that improve performance on Enterprise Storage systems are neglected due to the abstracted layers within.

### Summary of invention

The invention relates to a framework and some embodiments for virtualised block devices that can be used when specific storage requirements are needed. An important aspect for performance optimisation is suitable alignment or realignment of files and raw data within a virtualised block device file (VBDF) representing the virtualised block device, such that I/O data requests coming from both, real machines and VMs across the physical layer infrastructure (network stacks, servers, up-to-spinning-disk arrays) are optimised.

The invention is also related to a reduction in storage space occupied by the virtualised block device, by smart disposal of unused virtual blocks which are discarded in the virtualised block device data file physically embodying the virtualised block device.

The invention is defined by the independent claims. Advantageous additional embodiments of the invention are disclosed in the respective dependent claims.

The invention relates to VBDs and their realisation on real machines, when using Virtual Block Device Files VBDF. The invention is further related to optimising I/O data throughput with block devices (logical storage) on Virtual Machines VMs. When physical file systems reside on virtual block devices this is agnostic of the actual file system structure or of allocation strategies.

Blocks in a virtual block device VBD represented in a virtual block device file VBDF represent a strongly rational data structure. The order (and existence) of each individual virtual block is not the same in the VBDF: for example in a 'toy case' of a 5-block VBD labelled #0, #1, #2, #3, #4, wherein a 'toy model' is a simplified model (common term used in Theoretical Physics) that is sufficient for explaining one simple phenomenon but is too simplified for the rest of the model to be effectively relevant. Regarding a virtual block device comprising only N=5 blocks: even when considering a VBD with very huge blocks such a tiny block device in total cannot be large for any application.

Any guest virtual machine VM using such a VBD will read a Small Computer System Interface SCSI device with five, always-accessible blocks ordered as such. The blocks on the VBD can be stored in different ways. E.g., the VBDF might consecutively represent blocks #0, #2, #3 and #1. The final part of the VBD (block #4), which might not yet have been written by any guest VM, is not even represented.

The structure of the VBDF format, as well as the allocation strategies of the host or the hypervisor system, take advantage of this discrepancies in order to optimise the blocks in a VBFD in a way that is agnostic of one or more of the following applications:
a) Host-side optimisations
   - Physical structure of the real host/hypervisor storage, e.g. RAID (Redundant Array of Independent Disks) chunks and I/O data paths like in a SAN/NAS (Storage-Area-Network / Network Attached Storage System) environment, down to a sector sized of the actual spinning disks or SSDs);
   - Networking protocol and packet sized for networked VMs;
   - Usage pattern in a data cloud or in shared environments, with multiple clients and VMs accessing the same VBD (like in a cloud storage or in a render farm).
b) Guest-side optimisations
   - Virtualised physical structure required by the guest system or the VM;
   - Application specifications for accessing data within the VBD, e.g. reading raw file sequences or high-performance video streaming or multi-threaded I/O throughput like in a complex virtualised render farm;
   - Recycling and re-claiming of unused space in the VBD by translating SCSI-level TRIM operations (TRIM is an ATA command) done by the host VM into the guest system, which physically de-allocates/releases/removes/frees the associated block or blocks from the VBDF representing the VBD.

An advantage of the invention is that soft/hard blocking is introduced as abstraction level between the blocking structure of the virtual block device VBD (called soft blocking), the allocation space of the virtualised block-device file VBDF representing it (called hard blocking), and the potentially-manifold blocking of real-world structures of the networking/storage infrastructure hosting the VBD, i.e. from the network packets up to the spinning disks' structures. This layer is an elastic framework that adopts the VBD to different host-guest storage combinations, and it is completely transparent to the guest machine.

Further improvements can be achieved by using information coming from the guest VM. For example, raw data blocks that are no more used and can be discarded, thus saving space on the VBDF (i.e. the guest systems' own storage), or by providing a trigger for further optimisations.

### Brief description of drawings

Exemplary embodiments of the invention are described with reference to the accompanying drawings, which show in:
- Fig. 1: a fragmented file system in a host machine;
- Fig. 2: defragmented virtualised block device file in a guest machine;
- Fig. 3: re-indexed hard blocks in the virtualised block device file;
- Fig. 4: virtualised block device file in the guest machine configured to virtualise a Solid-State Drive, thus enabling TRIM operations in the host machine's oper-ating system;
- Fig. 5: generating a test file on the file system in the host block device, wherein only the non-zero blocks are physically written in the virtualised block device file on the guest file system.

### Description of embodiments

Even if not explicitly described, the following embodiments may be employed in any combination or sub-combination.

In a virtualised scenario a real computer/processor or a virtual machine (VM) may both use virtualised storage resources, top-to-bottom: virtual *file systems* (like network file systems), virtual *logical units* (like in a software RAID environment), or *virtual block devices* (hereinafter referred to as VBDs). All three types can be stored in files and accessed as loopback devices, which is a known concept of UNIX file systems, well before VMs were used. These loopback devices point to single-part files or to multi-part files usually for overcoming maximum file size limitations of the guest file systems and for facilitating VBD portability.

Existing file formats (like VMware VMD files, as well as VirtualBox or Citrix proprietary file formats) can be used with little or no modifications.

Data blocks in a virtual block device VBD represented in a virtual block device file VBDF are a strongly rational data structure. That data structure is:
- Finite
   The VBD has a finite number of blocks, although this may not be fixed over time (number of blocks in a VBD may dynamically change e.g. due to scalability requirements);
- Internally well-ordered
   There is always a first virtual block representing the block #0 of the device on the host side, and each block has a virtual position which, at the host level, means that the blocks are all in a strict order of precedence to one another;
- Non-locally referenced
   The VBDF is a file but does not store the virtual blocks in the same order as they are presented to the guest systems (be them either real machines or VMs);
- Elastic
   Not all virtual blocks are represented in a VBD, i.e. at the host level (this will be described in more detail below), but the primary scope of this feature is to save space on the guest storage hosting the VBDF;
- Homogeneous
   Each block has the same fixed size, which is an integer power of '2' (usually between 128 bytes and a few mebibytes). That size can be changed at discrete times (e.g. when the VBD is re-purposed or re-scratched).

A given VBD is thus presented to the host system as a series on *N* blocks, each *B* bytes in size, i.e. the overall VBD is ***NB*** bytes large. These blocks are called 'hard blocks'. The VBDF is structured with its own blocking, whose blocks are called 'soft blocks' and have a size of ***b*** bytes, where either *B* divides ***b*** or ***b*** divides *B.* Thus, the number of soft blocks is the floor function of ***NB*/*****b**.* The ratio between the two sizes is called the VBD's (or VBDF's) blocking factor, where padded hard/soft blocks to reach the overall VBD size of *NB* bytes, if present, are discarded or are represented but ignored.

Soft blocking is the 'back-end' allocation framework for the host systems to access a VBDF. Hard blocking is the 'front-end' allocation framework for the guest systems to access the VBD.

When a guest system reads from / writes to a VBD's block, it actually reads/writes using whole soft block(s). The balance between hard blocks and soft blocks can change, on a guest basis: balancing between the two can tune I/O performances because different applications and uses of virtualised storage are needed.

In the simplest case ***B** = **b**,* i.e. soft and hard blocks coincide. For simplicity's sake the below embodiments will use this hypothesis.

While the VBD itself has locality of reference among its blocks (i.e. one block always precedes the next one) and the VBDF is internally well-ordered as mentioned above, the VBDF is also non-locally referenced and thereby externally unor-dered.

In case of a 'toy' 5-block VBD (*N = 5*)*,* the guest system is presented with (e.g. using an SCSI logical block addressing (LBA) scheme) blocks #0, #1, #2, #3, #4. These blocks are always available and are logically sequenced in this manner, to the host BIOS and to the application operating system (OS) as well. But the VBDF representing this VBD may represent these blocks in a different order, e.g. first the raw contents of the (data, post-header part of the) VBDF in block #0, followed by blocks #2, #3, #1 and #4.

Some or all of the blocks might even not be represented at all due to the elastic property described above. This elastic property allows discarding of unused blocks of the VBD when this information is triggered by guest-issued or host-issued events. The (hard) blocks of the VBD that are represented in the VBDF are called solid. Their data (i.e. the data of hard blocks integrally represented by each single soft block) is meaningful - at least at a block-level stage. The (soft and hard) blocks that are not represented in the VBDF correspond to hard blocks that are yet virtually available to the guest system but their content is not meaningful. There are no soft blocks containing them in the VBDF, and the first I/O request coming from the guest system will immediately generate them anew. Such blocks are called 'airy' for this reason.

Reasons for allowing airy blocks are manifold and may include, but are not limited to, the following:
- The VBD has been created on the host/hypervisor side but represents a block device not yet properly initialised. Bare-metal examples are virgin disks or just-build RAID arrays;
- The blocks used to contain a file system or a RAID system that is no more in place;
- The blocks were used to allocate a file on a file system, and the file was moved on another file system or simply removed from it.

Usually the VBDF will keep one or more data regions for indexing airy and solid blocks. These regions might be sparse within the VBDF allocation regions itself and their disconnected parts can be structured as linked lists.

### Firs t embodiment

For example in a post-production facility or other video-intensive application/workflow, large files (or very long file sequences of files where each file represents a single video frame and the numbering of the frames of a sequence goes along the time axis), the highest possible I/O bandwidth is required, for example for playback of high-resolution video in real-time or for faster streaming / transcoding.

The guest system (guest machine and/or hypervisor) re-shuffles the (solid) blocks in a VBDF as requested. This is particularly useful in the case where between the guest and host systems block-based file allocation strategies are needed (like file defragmentation or file-sequence de-scattering, cf. http://en.wikipedia.org/wiki/File_sequence#File_scattering), but the other one of them is the one which has those capabilities, or both have them but they are ineffective if combined with the virtualised storage.

Combining the block re-scrambling with the re-blocking of the VBD itself increases performance for specific applications. The (hard) blocks that may ultimately need locality of reference (e.g. be contiguously allocated) on the guest VM may be soft-reallocated. For example in case the VBD needs contiguous access to specific blocks (the host OS would thus issue a sequential read/write operations to access those block), but the file is actually scattered and does not occupy consecutive blocks on the VBD (i.e. the files are fragmented). A synergetic algorithm can be used by the VM or hypervisor to soft re-allocate the blocks: their number would change so that the file would appear, in the host OS only, as instantly defragmented. In reality, it's just the 'labels' of the virtual blocks that have changed such that they now appear as consecutive. No block defragmentation has happened at either guest or host level and there has been no data-block movement either in the VBD or in the VBDF 'above'.

This means that no real performance increase can be expected, but the host OS can now issue sequential read/write commands.

Another scenario is that the defragmentation is done by the VM and/or by the guest OS on the VBDF: the file data blocks are re-scrambled such that (at least for) the parts of the blocks that are associated to a specific file that needs sequential access by the host OS, the access can now happen. The file is still fragmented to the host OS but the VBDF is, in fact, presenting the soft-hard blocks association to the VM so that the file in the VBD occupies contiguous hard blocks in the VBDF: the real I/O by the VM can thus be performed as consecutive read/write operations (thus improving performance at guest machine level).

This scenario is particularly useful as the VM or the hypervisor are expected to use professional storage techniques and have de-fragmentation/de-scattering technologies that might neither be available nor be as effective as to the host virtualized storage and operating systems.

The elastic properties of a VBDF is now used with another managed feature of the host system, that monitors certain guest-triggered operations on the VBD and then issues a series of operations, resulting in improved I/O between VBD and VBDF.

At a file system level, the performance can be significantly improved by two allocation strategies:
- re-aligning files such that they are internally non-fragmented, i.e. consecutive blocks of each file data are allocated on consecutive blocks of the underlying device;
- in case of frame-per-file sequences (e.g. frame0001.tiff, frame0002.tiff, frame0003.tiff, ...), having the files allocated on consecutive portions of the underlying block device - which usually means that the file sequence is unscattered.

The above file defragmentation and descattering techniques are not effectively supported on all file systems. The below *Second embodiment* states that, no matter what the file system is on the VBD, a hypervisor that owns the VBDF can realign the file on the real, hosting file system by just knowing which files need to be defragmented or descattered. An example processing for a (single) file defragmentation is:
- Progressively read the correct sequence of the VBD's blocks numbers where the file is allocated on the VBD. This information is quickly read accessing the VBDF's allocation table, e.g. FAT area for FAT32 file system, MFT area for NTFS file system, the chained superblocks for ext2/3/4, or XFS file systems.
- In a hard case, the blocks of the VBDF are re-allocated on another area of the hosting storage such that they are contiguously allocated according to the order in which the blocks would be read if the file is to be accessed sequentially (for example, during a play-back request).
- The re-allocation can be done on the background at hypervisor level and can be performed during a de-duplication phase in the data centre storage.

In the case of descattering of a file sequence frame####.tiff (ranging from file #0 to file #9999):
- Each file in the sequence is processed sequentially along with its file name numbering, which resembles the time-progression of the video frames, or the chronology in any incremental log/database file;
- For each file in the sequence, the allocation of its internal blocks is managed by the defragmentation processing shown above;
- Each file is re-allocated (either hard-way or soft-way) such that the blocks in the VBDF allocating the n-th file are physically placed right after the blocks allocating the (n-1)-th file and right before those allocating the (n+1)-th file.

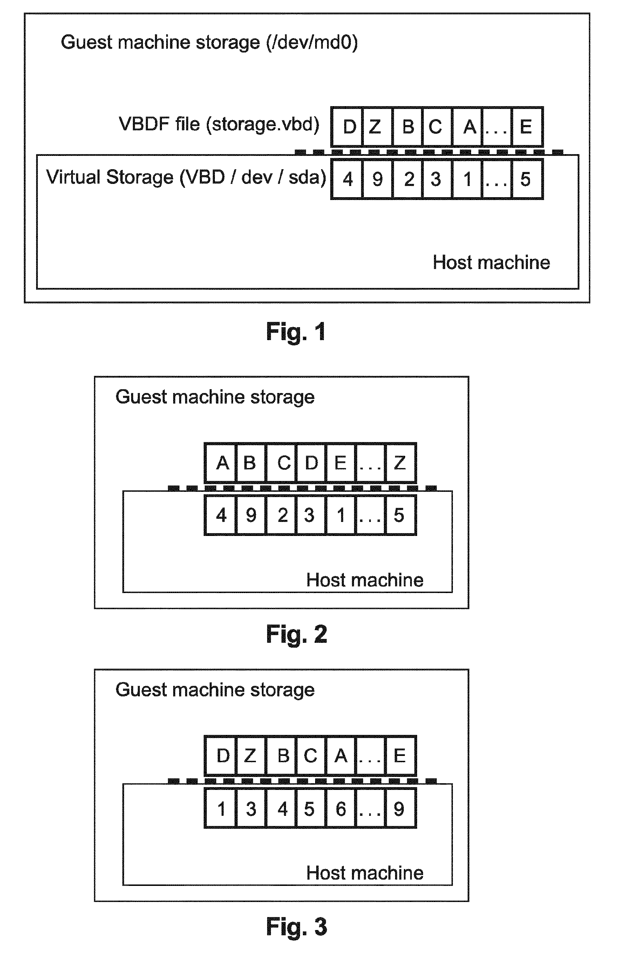

Fig. 1 shows blocks of a file system in a host machine device that is fragmented in view of host and guest machines, and would need contiguous allocation for high-performance sequential I/O access with a guest machine. This can be achieved either according to Fig. 2 or according to Fig. 3.

In Fig. 2 the VBDF is defragmented in the guest machine storage such that consecutive blocks of a file are physically contiguous with respect to guest-driven I/O operations, but the file system still appears fragmented to the host machine operating system.

In Fig. 3 the hard blocks in the VBDF are re-indexed such that the corresponding soft blocks of the VBD appear as contiguous in the host file system, but the VBDF is still a fragmented file in the guest machine storage.

### Second embodiment

In this embodiment the invention uses the low-level TRIM operation available on many flash / solid state memories like SSDs. This operation is issued by compatible file system allocators. SCSI commands for solid-state memories (this embodiment applies also to other memory types as well) include an ATA command TRIM which flushes the contents of specific physical sectors/blocks of the device by wiping or deleting it. Sectors that have not been 'TRIMmed' need a complete wiping before they can be actually overwritten, which means two (slow) I/O write operations instead of one, which makes most SSDs slower on subsequent writes than they are on first-time write operations.

To alleviate this, TRIMmed sectors are made as having already been wiped, therefore they can be directly re-written. Operating system OS support for TRIM-enabled devices is critical especially for mobile and embedded systems that need quick write performance on their storage as well. Windows 7 and most recent Linux distributions supporting up-to-date file system drivers (on some specific file systems only - like ext4 or BTRFS) do support TRIM operations, i.e. if a file is removed from a volume/file system the OS issues TRIM operations on the blocks previously occupied by that file.

The second embodiment of the invention captures the TRIM operations on the hard blocks of a VBD and presents them to the guest system / hypervisor, which in turns removes the associated soft blocks of the VBDF. The corresponding hard blocks become airy. Note that a just-created VBD is made up by airy data blocks only, and these airy data blocks are solidified as soon as they are first needed.

The guest system may have a processing that virtually presents random content or zero-filled content on blocks that have just been solidified. On the guest side this means using a VM that supports TRIM operations at OS level: they will be catched by the host system or by the hypervisor that globally manages VBDFs.

Garbage collection of unused file system space is very bad in virtualised storage. Space is not immediately freed from a VBDF when a file is, for example, deleted from the virtualised file system. The inventive processing translates the TRIM command issued by the OS of the virtual machine on the VBD into an operation on the hypervisor that physically removes the blocks occupied (in the VBDF) from the file that has just been removed in the VBD. I.e., a feature is exploited that is already implemented at operating system level (when the OS is running on the VM that owns that particular VBD), in order to automatically get rid of unused blocks in the VBDF as soon as they correspond to TRIMmed sectors in the virtualised solid-state drive.

A virtual machine is made capable of hooking TRIM operations from the virtual SCSI interface as soon as they are issued on the virtualised storage. The processing de-allocates internal parts of a file (e.g. a virtual block device file VBDF), thus reducing its size occupation in the hosting storage/file system. Hooked TRIM operations issued by the VM OS are translated into de-allocation operations on the VBDF. The virtualised storage (VBD) is presented to the VM as a Solid-State Drive (SSD) with TRIM-enabled capabilities. The operating system run in the VM is capable of interpreting file system operations (like file deletion or file movement, or other allocation strategies) and issuing TRIM commands on the storage hosting that file system in order to save space.

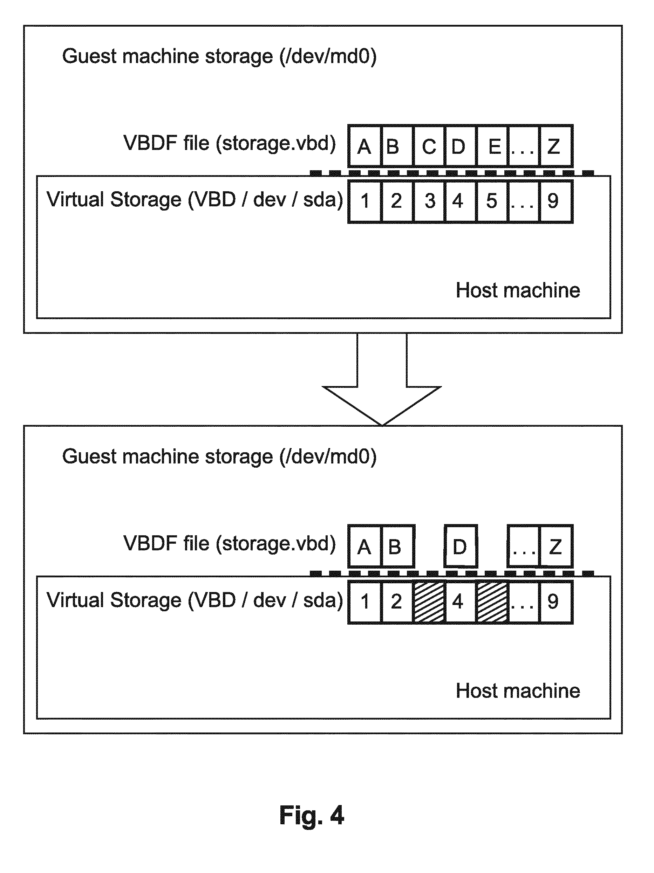

In Fig. 4 the VBDF in the guest machine storage is configured by the VM/hypervisor so as to virtualise a Solid-State Drive, thus enabling TRIM operations in the host machine's operating system. The host machine operating system issues TRIM operations on blocks #3 and #5 of /dev/sda (by virtually zeroing them) as a consequence of file removals on file system. TRIM operations on the host machine are catched by the VM and the corresponding portions of the VBDF are removed, thus reducing its size (and freeing space on the guest machine storage).

The second embodiment allows to more efficiently retrieve unused space on a Virtual Block Device VBD, and acts as a real virtual-storage garbage collection.

### Third embodiment

This embodiment uses the second embodiment to capture per TRIM operations unused blocks on the VBD, but uses the sparse file capabilities on the file systems that host the VBDFs instead of releasing the blocks from the VBDF file. When a block in the VBD is reported as not used any more on the guest system (e.g. after a file system initialisation, a zeroing of the sectors or a TRIM operation), the VBDF file, if hosted on a file system supporting sparse files (like some cluster file systems, Microsoft DFS or the Linux ext4 file system), makes the appropriate communications with the allocator part of the guest OS to re-allocate the file accordingly.

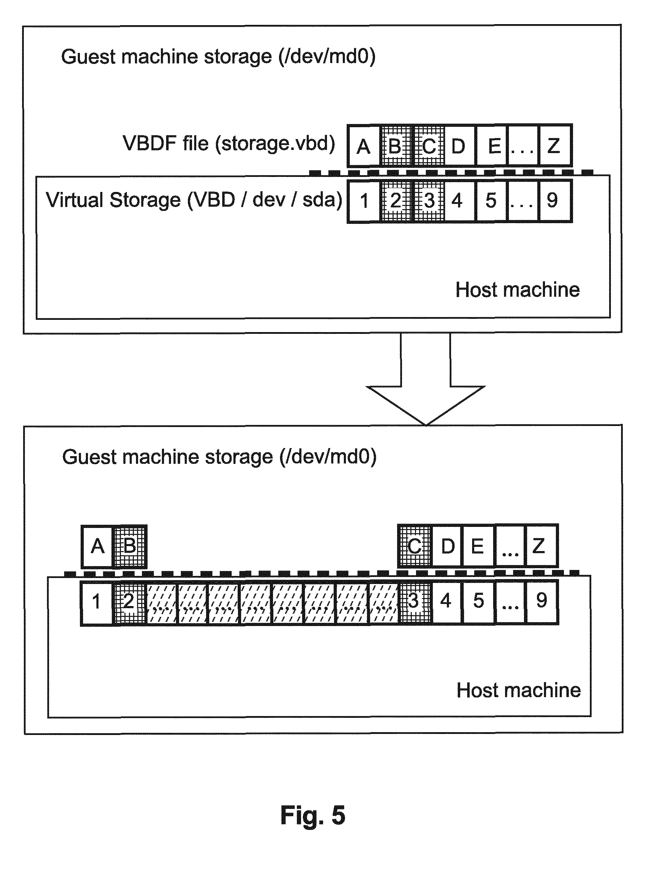

In the processing, a number of blocks in the VBD are marked as unused (e.g. as a consequence of a TRIM operation on the virtual SSD, or as a consequence of offline file system occupation analysis), the corresponding portions of the VBDF file are deleted and are replaced by 'sparse' blocks, i.e. blocks that are only virtually represented in the hosting file system metadata as occupied, but are in fact free. This is depicted in Fig. 5. A 10M-blocks test file test.txt is generated on the file system in the host machine block device /dev/sda, but it has all zero-blocks except from first and last blocks, which occupy absolute blocks #2 and #3 in the VBD. The host machine file system does not support sparse files, thus all the 10M blocks are virtually allocated in the VBD. Thereby only the non-zero blocks are physically written in the VBDF on the guest machine file system.

The inventive processing can be carried out by a single processor or electronic circuit, or by several processors or electronic circuits operating in parallel and/or operating on different parts of the inventive processing.

## Claims

1. Method for processing Virtual Block Device File data blocks denoted hard blocks in a guest machine storage and corresponding data blocks denoted soft blocks in a virtual storage of a host machine, so as to facilitate improved I/O between host machine and guest machine, said method including the step:
- in case data blocks of a virtual block device file are fragmented in the guest machine storage as well as in the corresponding virtual storage in the host machine, defragmenting the virtual block device file data blocks in the guest machine storage such that consecutive hard data blocks of the file are physically contiguous with respect to guest machine-driven read/write operations, or re-indexing the virtual block device file data blocks in the guest machine storage such that the corresponding hard data blocks of the virtual storage of the host machine are contiguous with respect to host machine-driven read/write operations in the host file system.

2. Method according to claim 1, wherein said defragmenting of hard data blocks in the guest machine storage is carried out by accessing the allocation table of said virtual block device file.

3. Method according to claim 1 or 2, wherein the hard data blocks of said virtual block device file are re-allocated on another area of the virtual storage of the host machine such that these soft data blocks are contiguous with respect to host machine-driven read/write operations.

4. Method according to claim 1, wherein said virtual block device file in the guest machine storage is configured so as to virtualise a Solid-State Drive, further including the step:
- said host machine issues TRIM operations on unnecessary ones of said soft data blocks;
- said guest machine removes physically the corresponding soft data blocks in said virtual block device file storage.

5. Method according to claim 4 wherein, in case soft data blocks in the host machine virtual storage are unused, corresponding portions of the virtual block storage are deleted by virtually allocating them and, by using sparse file capabilities in the file system of said guest machine, the corresponding sections in said virtual block device file are replaced by sparse blocks.
